(19) Europäisches Patentamt
European Patent Office
Office européen des brevets

(11) Numéro de publication: **0 132 198**
**B1**

(12) # FASCICULE DE BREVET EUROPÉEN

(45) Date de publication du fascicule du brevet: **13.01.88**

(51) Int. Cl.4: **B 32 B 17/10**

(21) Numéro de dépôt: **84401463.9**

(22) Date de dépôt: **10.07.84**

(54) **Vitrage feuilleté de sécurité.**

(30) Priorité: **11.07.83 FR 8311506**

(43) Date de publication de la demande: **23.01.85 Bulletin 85/4**

(45) Mention de la délivrance du brevet: **13.01.88 Bulletin 88/2**

(84) Etats contractants désignés: **AT BE CH DE FR GB IT LI LU NL SE**

(56) Documents cité:
**EP-A-0 054 491**
**DE-A-3 135 672**
**FR-A-2 385 751**
**FR-A-2 398 606**
**FR-A-2 442 128**
**GB-A-2 074 940**
**US-A-4 103 070**

(73) Titulaire: **SAINT- GOBAIN VITRAGE, Les Miroirs 18, avenue d'Alsace, F-92400 Courbevoie (FR)**

(72) Inventeur: **Bravet, Jean- Louis, 5 avenue du Moulin, F-60150 Thourotte (FR)**
Inventeur: **Colmon, Daniel, 6 rue du Colonel Fabien, F-60150 Thourotte (FR)**
Inventeur: **Daude, Gérard, 11 rue René Voisin, F-33140 Villeneuve D'Oron (FR)**
Inventeur: **Moncheaux, Michel- Jean, 9 rue des Sablons, F-60200 Compiègne (FR)**

(74) Mandataire: **Muller, René, SAINT- GOBAIN RECHERCHE 39, quai Lucien Lefranc, F-93304 Aubervilliers (FR)**

**EP 0 132 198 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1988

## Description

L'invention concerne les vitrages feuilletés notamment des pare-brise de véhicule comprenant un support rigide transparent en verre de silicate, une couche de matière plastique transparente ayant des propriétés d'absorbeur d'énergie (couche A E) et une couche de revêtement transparente en matière plastique résistant à la rayure et à l'abrasion désignée par couche auto-cicatrisable ou encore couche de protection interne (couche P I), car orientée vers l'intérieur de l'habitacle dans le cas d'un pare-brise.

Des vitrages feuilletés de ce type sont connus. Par example, dans la publication de brevet français 2 134 255, on décrit un vitrage fauilleté comprenant une feuille de verre, une couche d'une matière plastique ayant des propriétés d'absorbeur d'énergie, notamment une couche de polyvinylbutyral plastifié, un revêtement protecteur relativement mou à base d'un polyuréthane aliphatique. Un tel vitrage feuilleté n'était pas entièrement satisfaisant car après un laps de temps pouvant varier de quelques jours à plusieurs mois, il se produisait une perte des propriétés d'adhésion notamment entre le verre et la couche intercalaire entrainant un décollement des éléments du vitrage feuilleté, ainsi qu'une perte des qualités optiques du vitrage avec formation de zones troubles. Ces pertes étaient dues semble-t-il à une reprise d'humidité de la couche de polyvinylbutyral plastifié.

On connait également d'après la publication du brevet français 2 398 606 un vitrage feuilleté du type décrit précédemment dans lequel la couche intercalaire ayant des propriétés d'absorbeur d'énergie est un polyuréthane thermoplastique obtenu à partir d'au moins un diisocyanate aliphatique et d'au moins un polyesterdiol ou polyétherdiol, le rapport des groupements équivalents NCO aux groupements équivalents OH étant de préférence compris entre 0,8 et 0,9. Ce vitrage conserve ses bonnes propriétés optiques et l'adhésion reste bonne entre les éléments, dans des conditions de température et d'humidité très variables, mais les propriétés biomécaniques du vitrage et notamment la résistance aux chocs ne sont pas entièrement satisfaisantes.

On connait encore d'après la publication de brevet européen 0 054 491 un vitrage feuilleté ayant la structure décrite précédemment et pour lequel la couche intercalaire de matière plastique ayant des propriétés d'absorbeur d'énergie est à base d'un polyuréthane-polyurée présentant une structure linéaire et une teneur en groupe urée de l'ordre de 1 à 20 % en poids, ce polyuréthane-polyurée étant le produit réactionnel d'un prépolymère issu d'un composant polyol et d'un composant isocyanate pris en excès, avec au moins une diamine. Cette couche intercalaire est fabriquée par extrusion d'une résine polyuréthanepolyurée ou par coulée d'une solution de ladite résine et évaporation des solvants, ce qui dans un cas comme dans l'autre nécessite plusieurs opérations successives.

Dans le cas de l'extrusion, il est nécessaire d'effectuer une synthèse préalable de la résine pour pouvoir l'extruder.

En outre pour obtenir la qualité optique nécessaire à l'application envisagée, il faut "repasser" la feuille. Cette qualité optique obtenue ne se maintient d'ailleurs généralement pas dans le temps car la matière plastique garde en mémoire son procédé de fabrication et la qualité obtenue par le "repassage" s'amenuise avec le temps.

De plus, l'extrusion de la couche ayant des propriétés d'absorbeur d'énergie pose un problème d'assemblage avec la couche autocicatrisable.

Dans le cas de la coulée d'une solution, il est également nécessaire d'effectuer une synthèse préalable de la résine. Il faut ensuite dissoudre celle-ci dans un solvant puis couler la solution et évaporer le solvant de façon répétitive pour l'obtention d'une couche d'épaisseur compatible avec le caractère absorbeur d'énergie recherché. L'évaporation du solvant constitue en outre une source de nuisance.

L'invention obvie aux inconvénients cités et propose un vitrage de sécurité utilisé notamment en tant que pare-brise de véhicule qui présente de bonnes propriétés optiques et biomécaniques et qui les conserve dans des conditions variables de température et d'humidité.

Le vitrage selon l'invention comprend de même que les vitrages connus cités ci-dessus, une feuille de verre, une couche de matière plastique ayant des propriétés d'absorbeur d'énergie et une couche de revêtement autocicatrisable résistant à la rayure et à l'abrasion, son originalité résidant dans le choix de la couche de matière plastique ayant des propriétés d'absorbeur d'énergie.

Cette couche est selon l'invention, et comme revendiqué dans la publication EP-A-133 090 déposée le même jour par la demanderesse, formée dans un processus en continu, par coulée réactive sur un support plan horizontal duquel elle est détachable, d'un mélange réactionnel d'un composant isocyanate et d'un composant à hydrogènes actifs notamment un composant polyol, le composant isocyanate comprenant au moins un diisocyanate aliphatique, cycloaliphatique ou un prépolymère de diisocyanate, ce composant ayant une viscosité inférieure à environ 5 Pas à + 40° C, le composant polyol comprenant au moins un polyol long difonctionnel de masse moléculaire comprise entre 500 et 4000 et au moins un diol court en tant qu'agent d'allongement de chaine. Par coulée réactive on entend la coulée sous forme d'une couche ou d'un film d'un mélange liquide des composants à l'état de monomères ou de prépolymères, suivie d'une polymérisation de ce mélange par la chaleur. Cette coulée réactive qui

fournit à la couche ses bonnes propriétés mécaniques et optiques sera décrite plus complètement dans la suite de la description.

Les proportions des composants du polyuréthane sont choisies pour obtenir de préférence un système stoechiométriquement équilibré, c'est-à-dire que le rapport des groupements équivalents NCO apportés par le composant diisocyanate aux groupements équivalents OH apportés par le composant polyol, c'est-à-dire le ou les polyols longs et le ou les diols courts est de l'ordre de 1. Lorsque le rapport NCO/OH est inférieur à 1, plus il décroît et plus les propriétés mécaniques recherchées pour l'application deviennent rapidement peu satisfaisantes. Lorsque tous les composants du polyuréthane sont difonctionnels, la limite inférieure de rapport NCO/OH pour l'obtension de propriétés mécaniques satisfaisantes se situe à 0,9 environ. Lorsqu'un des composants au moins est trifonctionnel cette limite inférieure peut être baissée jusqu'à environ 0,8. Lorsque le rapport NCO/OH est supérieur à 1, plus il croît et plus certaines propriétés mécaniques de la couche obtenue par coulée réactive sont renforcées, par exemple la couche devient plus rigide, mais étant donné le coût plus élevé du composant isocyanate par rapport à celui du composant polyol, le choix de ces rapports NCO/OH sensiblement égal à 1 est un bon compromis entre les propriétés obtenues et le coût.

Les proportions entre le polyol long et le diol court peuvent varier en fonction des propriétés désirées et aussi du rapport des groupements équivalents, le nombre des groupements équivalents OH dus au diol court représentant cependant généralement de 20 à 70 % des groupements équivalents totaux du mélange formant le composant polyol dans le cas où le rapport des groupements équivalents NCO sur les groupements OH est de l'ordre de 1. Lorsqu'on augmente la proportion du diol court on durcit la couche et on augmente généralement son module.

Les diisocyanates convenables utilisés dans le cadre de l'invention sont choisis notamment parmi les isocyanates difonctionnels aliphatiques suivants: hexaméthylènediisocyanate (HMDI), 2,2,4-triméthyl 1,6-hexanediisocyanate (TMDI), bis 4-isocyanatocyclo-hexylméthane (Hylène W) (marque déposée), bis 3-méthyl-4-isocyanatocyclohexylméthane, 2,2 bis (4-isocyanatocyclohexyl) propane, 3-isocyanatométhyl-3,5,5 triméthylcyclohexylisocyanate (IPDI), m-xylylènediisocyanate (XDI), m- et p-tétraméthylxylylènediisocyanate (m- et p-TMXDI), trans-cyclohexane-1,4 diisocyanate (CHDI), 1,3 (diisocyanatométhyl)- cyclohexane (XDI hydrogéné).

On utilise de préférence de l'IPDI notamment pour des raisons de prix de revient.

Selon le premier aspect de l'invention, on utilise un composant isocyanate contenant des fonctions urées. Ces fonctions urées améliorent certaines propriétés mécaniques de la couche. Le taux d'urée peut représenter jusqu'à environ 10 % du poids total du composant isocyanate à fonctions urées. De préférence le taux d'urée est compris entre 5 et 7 % du poids total dudit composant. Pour la raison invoquée précédemment on utilise de préférence du 3-isocyanatométhyl-3,5,5 triméthylcyclohexylisocyanate comportant des fonctions urées (IPDI et dérivés).

Les polyols longs convenables sont choisis parmi des polyétherdiols ou des polyesterdiols de masse moléculaire 500 - 4000; les polyesterdiols étant les produits d'estérification d'un diacide tel que l'acide adipique, succinique, palmitique, azelaïque, sébacique, ophtalique, et d'un diol tel un éthylèneglycol, propanediol -1,3, butanediol - 1,4, hexanediol- 1,6, les polyétherdiols de formule générale

$H\text{-}[\text{- }O\ (CH_2)n\text{ -}]\text{-}_m\ OH$

avec n = 2 à 6; m tel que la masse moléculaire soit située dans l'intervalle 500 - 4000, ou les polyétherdiols de formule générale

$$H\ \text{-}[\text{-}OCH(CH_3)\ \text{-}\ CH_2\text{-}]\text{-}_m\ OH$$

avec m tel que la masse moléculaire soit située également dans l'intervalle 500 - 4000. On peut encore utiliser des polycaprolactonediols.

On utilise de préférence un polytétraméthylèneglycol (n = 4) de masse moléculaire 1000.

Les agents d'allongement de chaines convenables sont des diols courts de masse moléculaire inférieure à environ 300 et de préférence inférieure à 150, tels que les: éthylèneglycol, propanediol-1,2, propanediol-1,3, butanediol-1,2, -1,3, -1,4, diméthyl-2,2 propanediol-1,3 (néopentylglycol), pentanediol-1,5, hexanediol-1,6, octenediol-1,8, décanediol-1,10, dodécanediol-1,12, cyclohexanediméthanol, bispbénol A, méthyl-2 pentanediol-2,4, méthyl-3 pentanediol-2,4, éthyl-2 hexanediol-1,3, triméthyl-2,2,4-pentanediol-1,3, diéthylèneglycol, triéthylèneglycol, tétraéthylèneglycol, butyne-2-diol-1,4,butènediol-1,4 et décynediol substitués et/ou éthérifiés, hydroquinone-bishydroxyéthyléther, bisphénol A éthérifiés par deux ou quatre groupes d'oxyde de propylène, acide diméthylolpropionique. En général plus le diol est court plus le couche est dure.

On utilise de préférence le butanediol-1,4 qui est un bon compromis pour l'obtention d'une couche ni trop dure, ni trop souple, que l'on recherche pour ce type d'application en tant qu'absorbeur d'énergie.

Une des caractéristiques de le couche ayant des propriétés d'absorbeur d'énergie est qu'elle est obtenue par coulée réactive sur un support plan horizontal. Cette coulée réactive dont une forme à déjà été décrite par exemple dans le

publication de brevet français 2 442 128 pour l'obtention d'une couche de polyuréthane thermodurcissable à partir d'un mélange de composants trifonctionnels fournit de façon surprenante selon l'invention dans le cas de composants de départ difonctionnels une couche qui n'est pas entièrement thermoplastique lorsque le rapport des groupemente NCO/OH est sensiblement égal à 1.

Le coulée réactive implique une réaction de polymérisation rapide pour que le couche soit formée en des temps compatibles avec une fabrication industrielle. Ceci nécessite une tempéreture élevée, de l'ordre de 80 à 140°C environ, température à laquelle des réactions secondaires de ramification se produisent créant par exemple des groupements allophanates et/ou biurets entre les chaines d'uréthane, telles que:

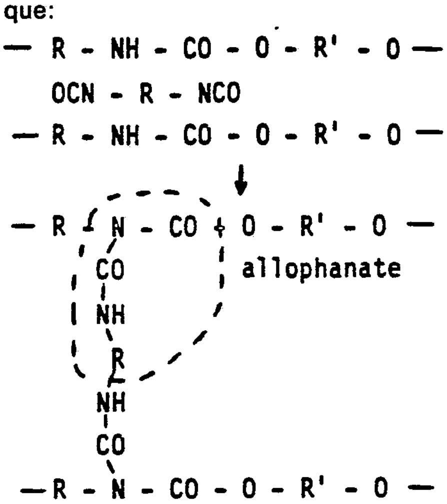


ou

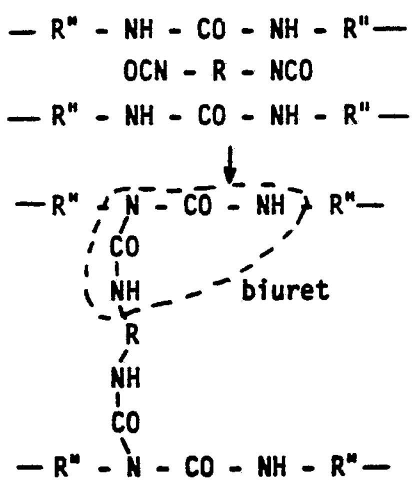


Dans ces conditions opératoires, mêmes avec des composants difonctionnels, lorsque le rapport NCO/OH est sensiblement égal à 1 comme indiqué précédemment, le produit obtenu n'est pas complètement thermoplastique, en effet il est infusible et insoluble dans la plupart des solvants des polyuréthanes tel que le tétrahydrofurane, le diméthylformamide. Ceci ne présente pas d'inconvénient, car le film ou la feuille est déjà formé; au contraire, on en tire comme avantage des propriétés mécaniques améliorées à formulation égale par rapport à un système équivalent polymérisé à basse température où seule une polycondensation linéaire se produit.

Lorsque le rapport NCO/OH est inférieur à 1 et de l'ordre de 0,8 à 0,9, une réticulation du type décrit ci-dessus ne se produit que de façon insignifiante.

Selon le deuxième aspect de la réalisation de la couche de polyuréthane ayant des propriétés d'absorbeur d'énergie, la composant polyol contient une faible proportion d'au moins un polyol de fonctionnalité supérieure à deux et notamment des triols aliphatiques monomères tels le glycérol, le triméthylolpropane, des triols à chaines polyéther, des triols de polycaprolactone, la masse moléculaire de ces triols étant généralement comprise entre 90 et 1000, des polyols mixtes polyéther/polyester de fonctionnalité supérieure à 2, par exemple de fonctionnalité comprise entre 2 et 3. L'ajout d'un polyol de fonctionnalité supérieure à 2, provoque des liaisons de pontage supplémentaires entre les chaines du polyuréthane et peut ainsi encore améliorer la cohésion de la couche.

Les proportions entre le polyol long, le diol court et éventuellement le polyol de fonctionnalité supérieure à 2 peuvent varier selon les propriétés désirées. On choisit généralement des proportions telles que pour un équivalent hydroxyle, le polyol long représente environ de 0,30 à 0,45 équivalent, le diol court d'environ 0,2 à 0,7 équivalent et le polyol de fonctionnalité supérieure à 2 environ 0 à 0,35 équivalent. Dans ces conditions, la couche présente les caractéristiques mécaniques suivantes mesurées selon les normes AFNOR NFT 46.002, 51.034 et 54.108:

- une contrainte au seuil d'écoulement $\sigma_y$ à -20°C inférieure ou égale à 3 daN/mm$^2$,
- une contrainte à la rupture $\sigma_R$ à + 40°C supérieure ou égale à 2 daN/mm$^2$,
- un allongement à la rupture $\varepsilon_R$ à + 20°C compris entre 250 et 500 %,
- une résistance à la déchirure amorcée Ra à + 20°C supérieure ou égale à 9 daN/mm d'épaisseur.

Suivant une autre réalisation de la couche AE de l'invention, le composant isocyanate peut contenir dans des proportions limitées, par exemple inférieures à 15 % en équivalent NCO, au moins un triisocyanate tels un biuret d'isocyanate ou un triisocyanurate.

Sous un aspect de l'invention, une partie du composant polyol peut être remplacée par un produit à hydrogènes actifs différents tel une amine.

Un avantage important de la couche AE utilisée selon l'invention est qu'elle peut être formée par coulée réactive sur une première couche de matière plastique déjà polymérisée ou achevant

sa polymérisation, notamment la couche de matière plastique autocicatrisable, sans qu'il soit nécessaise de traiter la couche support,

La couche de recouvrement autocicatrisable résistante à la rayure en matière plastique que l'on désigne encore dans l'application selon l'invention par couche de protection interne (couche P I) est par exemple celle décrite dans les publications de brevets françaises 2 187 719 et 2 251 608. Cette couche autocicatrisable a dans les conditions normales de température, une haute capacité de déformation élastique, un faible module d'élasticité, inférieur à 2000 daN/cm$^2$ et de préférence inférieur à 200 daN/cm$^2$, et un allongement à la rupture de plus de 60 % avec moins de 2 % de déformation plastique et de préférence un allongement à la rupture de plus de 100 % avec moins de 1 % de déformation plastique. Les couches préférées de ce type sont des polyuréthanes thermodurcissables ayant un module d'élasticité d'environ 25 à 200 daN/cm$^2$ et un allongement d'environ 100 à 200 % avec moins de 1 % de déformation plastique.

Des exemples de monomères qui conviennent pour la préparation de ces polyuréthanes thermodurcissables sont d'une part les isocyanates difonctionnels aliphatiques comme le 1,6-hexanediisocyanate, le 2,2,4-triméthyl-1,6-hexanediisocyanate, le 2,4,4-triméthyl-1,6-hexanediisocyanate, le 1,3-bis (isocyanatométhyl)benzène, le bis (4-isocyanatocyclohexyl)méthane, le bis (3-méthyl-4-isocyanatocyclohexyl) méthane, le 2,2-bis(4-isocyanatocyclohexyl)propane et le 3-isocyanato-méthyl-3,5,5-triméthylcyclohexylisocyanate, ainsi que les biurets, isocyanurates et prépolymères de ces composés ayant une fonctionnalité de 3 ou davantage et d'autre part les polyols polyfonctionnels, comme les polyols ramifiés tels que les polyesterpolyols et polyétherpolyols obtenus - par réaction d'alcools polyfonctionnels, notamment le 1,2,3-propanetriol (glycérol), le 2,2-bis (hydroxyméthyl)-1-propanol (triméthyloléthane), le 2,2-bis (hydroxyméthyl)-1-butanol (triméthylolpropane), le 1,2,4,-butane-triol, le 1,2,6-hexane-triol, le 2,2-bis (hydroxyméthyl)-1,3-propane-diol (pentaérythritol) et le 1,2,3,4,5,6- hexane-hexol (sorbitol), avec des diacides aliphatiques comme l'acide malonique, l'acide succinique, l'acide glutarique, l'acide adipique, l'acide subérique et l'acide sébacique ou avec des éthers cycliques, comme l'oxyde d'éthylène, l'oxyde de 1,2-propylène et le tétrahydrofurane.

Le poids moléculaire des polyols ramifiés est avantageusement d'environ 250 à 4000 et de préférence d'environ 450 à 2000. Des mélanges de différents polyisocyanates et polyols monomères peuvent étre utilisés. Un polyuréthane thermodurcissable particulièrement préféré est celui décrit dans la publication de brevet française 2 251 608.

Le choix de l'épaisseur de la couche ayant des propriétés d'absorbeur d'énergie (couche A E) et de celle de la couche autocicatrisable (couche P I) et le rapport entre ces deux épaisseurs sont des facteurs importants. Selon l'invention, l'épaisseur totale des deux couches superposées est supérieure à 0,5 mm avec une épaisseur d'au moins 0,4 mm pour la couche ayant des propriétés d'absorbeur d'énergie.

En outre, l'adhésion entre cette couche et la feuille de verre doit être supérieure à environ 2 daN/5 cm, valeur mesurée au test de pelage comme décrit par la suite. Cette force d'adhésion ne devant cependant pas être trop élevée surtout lorsqu'on utilise une couche A E d'épaisseur relativement faible, proche de la limite inférieure convenable d'environ 0,4 mm.

La couche ayant des propriétés d'absorbeur d'énergie peut contenir divers additifs qui servent généralement à faciliter sa fabrication par coulée réactive, ou qui peuvent éventuellement le cas échéant améliorer encore certaines de ses propriétés.

Elle peut contenir un catalyseur tel un catalyseur d'étain par exemple le dibutyldilaurate d'étain, l'oxyde de tributylétain, l'octoate d'étain, un catalyseur organomercurique par exemple l'ester phenyl mercurique, un catalyseur amine par exemple le diazabicyclo- (2,2,2)-octane, le 1,8 diazabicyclo (5,4,0)-1 decene-7.

La couche peut contenir un stabilisant tel le bis (2,2,6,6- tétraméthyl-4 piperidyl) sebaçate, un antioxydant phénolique.

La couche peut contenir également un agent nappant tel une résine silicone, un ester fluoroalkylé, une résine acrylique.

On peut fabriquer une feuille à deux couches de la façon suivante.

On fabrique tout d'abord une première couche qui peut être soit la couche adhésive ayant des propriétés d'absorbeur d'énergie (couche A E), soit la couche de matière plastique autocicatrisable de protection interne (couche P I) formée notamment d'un polyuréthane thermodurcissable. Et sur cette première couche, on forme la deuxième couche.

On peut ainsi fabriquer tout d'abord une couche de polyuréthane thermodurcissable par coulée du mélange des composants sur un support de coulée. Après polymérisation des monomères et formation d'une couche thermodurcissable d'épaisseur pouvant varier entre 0,1 et 0,8 mm, on coule le mélange réactionnel des composants de la couche ayant des propriétés d'absorbeur d'énergie.

On peut encore procéder d'une façon inverse, c'est-à-dire en formant d'abord la couche ayant des propriétés d'absorbeur d'énergie (couche A E), et en formant ensuite la couche PI.

Pour fabriquer le vitrage feuilleté, on en assemble les éléments par utilisation de la pression, par exemple par pinçage entre les rouleaux d'une calandreuse, et par action de la chaleur, la couche AE étant toujours comprise entre le verre et la couche PI.

Il est possible d'améliorer la liaison des éléments ultérieurement en soumettant le vitrage

feuilleté à un cycle d'autoclave, par exemple une heure à une température d'environ 100 à 140° C et sous une pression d'environ 3 à 15 bars, ou par un cycle d'étuvage.

Des exemples de fabrication de vitrages feuilletés selon l'invention sont décrits par la suite.

**Exemple 1**

Sur un support en verre mobile défilant de manière continue, revêtu d'un agent de séparation qui peut être par exemple celui décrit dans la publication de brevet français 2 383 000, à savoir un produit d'addition modifié d'éthylène oxyde, on coule un mélange homogène avec les proportions suivantes de:

- 1000 g d'un polyéther d'un poids moléculaire d'environ 450 obtenu par condensation d'oxyde de 1,2-propylène avec du 2,2-bis (hydroxyméthyl)- 1-butanol et ayant une teneur en radicaux hydroxyles libres d'environ 10,5 à 12 %, contenant 1 % en poids d'un stabilisant, 0,05 % en poids d'un catalyseur à savoir du dilaurate de dibutylétain et 0,1 % en poids d'un agent nappant,
- 1020 g d'un biuret de 1,6-hexanediisocyanate ayant une teneur en radicaux isocyanates libres d'environ 23,2 %.

On utilise une tête de coulée telle que celle décrite dans la publication de brevet français 2 347 170. On forme une couche uniforme qui après polymérisation sous l'effet de la chaleur, par exemple environ 15 minutes à 120° C, présente une épaisseur d'environ 0,19 mm et des propriétés d'autocicatrisation.

Pour fabriquer la couche ayant des propriétés d'absorbeur d'énergie, on prépare au préalable le composant polyol en mélangeant un polytétraméthylèneglycol de masse moléculaire 1000 (par exemple le produit commercialisé sous l'appellation Polymeg 1000 (marque déposée) par la société QUAKER OATS, avec du butanediol-1,4, les proportions des deux constituants étant telles que le polytétraméthylèneglycol apporte 0,37 équivalent en groupes hydroxyles alors que le butanediol-1,4 en apporte 0,63.

Au composant polyol on incorpore un stabilisant à raison de 0,5 % en poids de la masse totale du composant polyol et du composant isocyanate, un agent nappant à raison de 0,05 % en poids calculé de la même façon et un catalyseur à savoir du diluarate de dibutylétain à raison de 0,02 % en polds calculé de la même façon que précédemment.

Le composant isocyanate utilisé est du 3-isocyanatométhyl- 3,5,5 -triméthylcyclohexylisocyanate (IPDI) présentant des fonctions urées obtenues par hydrolyse partielle de l'IPDI et ayant une teneur en groupements NCO d'environ 31,5 % en poids.

Les composants sont pris en quantités telles que le rapport NCO/OH est de 1.

Après dégazage sous vide des composants, le mélange porté à environ 40° C est coulé à l'aide d'une tête de coulée comme celle décrite dans la publication de brevet français 2 347 170, sur la couche de polyuréthane autocicatrisable formée précédemment. On forme ainsi une couche d'environ 0,53 mm d'épaisseur qui est soumise à un cycle de polymérisation consistant en 25 minutes de chauffage à 120° C environ.

La feuille à deux couches est retirée du support en verre et elle peut être manipulée aisément, stockée ou utilisée juste après pour la fabrication des vitrages feuilletés selon l'invention.

Pour fabriquer le vitrage on assemble la feuille à deux couches obtenue précédemment avec une feuille en verre recuit de 2,6 mm d'épaisseur. Le verre peut éventuellement être durci ou trempé. L'assemblage comme mentionné auparavant peut s'effectuer en deux étapes, une première étape consistant en un assemblage préliminaire obtenu par passage des éléments constitutifs du vitrage entre deux rouleaux d'une calandreuse, à cette fin, on peut par exemple utiliser le dispositif décrit dans la publication de brevet européen 0 015 209, la couche AE étant appliquée contre la face interne du verre et une seconde étape consistant en une mise du produit feuilleté obtenu dans un autoclave où pendant une heure environ il subit une pression d'environ 10 bars à une température d'environ 135° C. Ce cycle d'autoclave peut être éventuellement remplacé par un cycle d'étuvage sans pression.

Le vitrage obtenu présente une excellente qualité optique et une transparence parfaite.

L'adhérence obtenue entre la feuille de verre et la couche ayant des propriétés d'absorbeur d'énergie est mesurée sur le vitrage fabriqué par un test de pelage décrit ci-dessous.

On découpe une bande de 5 cm de large de la feuille de recouvrement à deux couches. On décolle l'extrémité de la bande sur laquelle on effectue une traction perpendiculaire à la surface de vitrage, avec une vitesse de traction de 5 cm par minute. L'opération est réalisée à 20° C. On note la force de traction moyenne nécessaire au décollement de la bande. En opérant ainsi, on obtient une force de traction de 10 daN/5 cm.

Des essais de résistance au choc à différentes températures sont réalisés sur le vitrage fabriqué selon l'exemple.

Le premier essai de résistance au choc est effectué avec une bille d'acier d'un poids de 2,260 kg (test de la grosse bille) que l'on fait tomber sur la partie centrale d'un échantillon de vitrage feuilleté de 30,5 cm de côté, maintenu sur un cadre rigide. On détermine la hauteur approximative pour laquelle 90 % des échantillons testés à la température choisie résistent à la chute de bille sans être traversés.

Pour le vitrage feuilleté selon l'exemple la valeur obtenue est de 8 mètres.

Un autre essai de résistance au choc est effectué avec une bille d'acier de 0,227 kg et de 38 mm de diamètre. Un essai est réalisé à une température de - 20° C, un autre est réalisé à une

température de + 40° C. Les valeurs obtenues sont respectivement de 11 et de 13 mètres.

Compte-tenu de la norme européenne R 43 en vigueur, les résultats recherchés sont d'au moins 4 mètres à la grosse bille, d'au moins 8,5 mètres à la petite bille à - 20° C et d'au moins 9 mètres à la petite bille à + 40° C.

Par ailleurs la couche PI montre des propriétés de surface suffisantes pour une utilisation dans un vitrage feuilleté et notamment une résistance à la rayure mesurée avec l'appareil ERICHSEN type 413 supérieure à 20 g et une résistence à l'abrasion selon la norme européenne R 43 avec un écart de flou (Δ flou) inférieur à 4 %.

Le vitrage selon l'exemple présente toutes les caractéristiques le rendant apte à l'utilisation en tant que pare-brise de véhicule.

**Exemple Témoin**

On opère de la même façon que dans l'exemple 1 avec les mêmes composants de départ et les mêmes proportions pour la fabrication de la couche A E sauf que cette couche n'est pas obtenue par coulée réactive mais par plusieurs coulées successives d'une solution de polyuréthane préparée par synthèse en solution, en vue d'obtenir une épaisseur de 0,53 mm.

Des essais de résistance au choc réalisés dans les mêmes conditions que dans l'exemple 1 fournissent les valeurs suivantes:

- 3,5 mètres à la grosse bille, 4 mètres et 3 mètres à la petite bille aux températures respectives de - 20° C et + 40° C.

Le test de pelage fournit une valeur de 8 daN/5 cm.

Ces valeurs sont insuffisantes ce qui montre que la coulée réactive utilisée dans l'exemple 1 donne à la couche A E les propriétés recherchées.

**Exemple 2**

On opère de la même façon que dans l'exemple 1, sauf que l'on fabrique des couches avec des épaisseurs différentes, à savoir une couche autocicatrisable (P I) de 0,41 mm d'épaisseur et une couche A E de 0,29 mm d'épaisseur.

Le vitrage feuilleté obtenu présente les caractéristiques suivantes:

Le test de pelage fournit une valeur de 10 daN/5 cm. Le test de la grosse bille et les deux essais à la petite bille donnent des valeurs respectives de 3,5, 9 et 9 mètres ce qui est insuffisant. Ces mauvaises valeurs sont dues à l'épaisseur insuffisante de la couche ayant des propriétés d'absorbeur d'énergie.

**Exemple 3**

On opère de la même façon que dans l'exemple 1, sauf que l'on fabrique une couche P I de 0,315 mm d'épaisseur et une couche A E de 0,415 mm d'épaisseur.

Le test de pelage fournit une valeur de 10 daH/5 cm. Les tests à la grosse bille et à la petite bille fournissent des valeurs respectives de 4,5, 10 et 13 mètres ce qui est tout à fait satisfaisant.

**Exemple 4**

On opère de la même façon que dans l'exemple 1 sauf que l'on fabrique une couche PI de 0,32 mm d'épaisseur, une couche AE de 0,42 mm d'épaisseur et que l'on fait subir à la surface du verre avant assemblage un traitement classique par un promoteur d'adhésion tel des silanes pour obtenir une valeur d'adhésion plus élevée.

Le test de pelage fournit une valeur de 20 daN/5 cm. Le test à la grosse bille fournit une valeur de 3,5 m. Cette valeur insuffisante pour la résistance au choc est due à l'adhésion trop forte de la couche AE avec le verre dans le cas où cette couche présente une épaisseur relativement peu élevée. Cet exemple est à comparer à l'exemple qui malgré l'utilisation des couches de mêmes épaisseurs fournit un vitrage satisfaisant grâce à une force d'adhésion plus faible.

**Exemple 5**

On opère de la même façon que dans l'exemple 1 sauf que l'on fabrique une couche PI de 0,40 mm d'épaisseur et une couche AE de 0,56 mm d'épaisseur et que l'on traite le verre avant assemblage comme dans l'exemple 4.

Le test de pelage fournit une valeur de 20 daN/5 cm alors que les tests à la grosse et petite bille fournissent des valeurs respectives de 8, 11,5 et 13 mètres.

Cet exemple est à comparer à l'exemple 4. Il montre que malgré une forte adhésion, l'emploi d'une couche AE de forte épaisseur fournit des valeurs de résistance mécanique satisfaisantes.

**Exemple 6**

On opère de la même façon que dans l'exemple 1, sauf que le composant polyol de départ pour la couche A E est formé d'un mélange de polytétraméthylèneglycol de masse moléculaire 1000, de butanediol - 1,4 et de polycaprolactonetriol (par exemple le produit commercialisé sous l'appellation Niax 301 (marque déposée) par la Société UNION

CARBIDE), dans des proportions respectives telles que pour un équivalent d'hydroxyle on utilise 0,35, 0,55 et 0,10 équivalent de chacun des polyols.

On fabrique des couches de 0,160 mm d'épaisseur pour la couche P I et de 0,660 mm d'épaisseur pour la couche A E.

Le vitrage obtenu présente des caractéristiques optiques et mécaniques tout à fait satisfaisantes. Les valeurs mesurées aux différents tests sont les suivantes: une adhésion de 3 daN/5 cm, des valeurs aux tests de billes de 9, 13 et 13 mètres.

**Exemple 7**

On opère de la même façon que dans l'exemple 6 sauf que les proportions des différents polyols sont respectivement de 0,35 équivalent OH pour le Polymeg 1000, 0,45 équivalent OH pour le butanediol - 1,4, et 0,20 équivalent OH pour le Niax 301.

On fabrique des couches de 0,31 mm d'épaisseur pour la couche P I et de 0,48 mm d'épaisseur pour la couche A E.

Les valeurs mesurées aux tests sont les suivantes: une adhésion de 3 daN/5 cm, des valeurs de 4,5, 10 et 12 mètres aux billes, ce qui est satisfaisant.

**Exemple 8**

On opère de la même façon que dans l'exemple 7 sauf que l'on utilise des épaisseurs de 0,39 mm pour la couche P I et de 0,39 mm pour la couche A E.

Les valeurs mesurées sont les suivantes: une adhésion de 4, des valeurs de 3, 8 et 8 pour les billes, ce qui est insuffisant.

Cet exemple comparé à l'exemple 7 montre que pour une même épaisseur pour la feuille à 2 couches, il existe un rapport d'épaisseur entre la couche A E et la couche P I qui, selon la valeur, fournit un vitrage satisfaisant ou non.

**Exemple 9**

On opère de la même façon que dans l'exemple 1 sauf qu'on effectue la polymérisation de la couche AE à une température de 60° C seulement, pendant 20 heures.

Des essais de résistance au choc réalisé dans les mêmes conditions que dans l'exemple 1 donnent les valeur suivantes:

- 6 mètres à la grossa bille, 6 mètres et 13,5 mètres à la petite bille aux températures respectives de - 20° C et + 40° C.

La valeur obtenue à la petite bille à - 20° C est insuffisante. Cet essai comparé à l'exemple 1 montre l'influence de la température de polymérisation lors de la coulée réactive.

**Revendications**

1. Vitrage feuilleté comprenant une feuille de verre, une couche intercalaire transparente à base d'un polyuréthane ayant des propriétés d'absorbeur d'énergie, une couche de revêtement transparente en matière plastique autocicatrisable, notamment à base d'un polyurethane thermodurcissable, caractérisé en ce que la couche intercalaire à base d'un polyuréthane ayant des propriétés d'absorbeur d'énergie est formée essentiellement d'un polyuréthane obtenu par coulée réactive sur un support plan horizontal d'un mélange réactionnel d'un composant isocyanate d'une viscosité inférieure à 5 Pas à 40° C et d'un composant polyol, le composant isocyanate comprenant au moins un diisocyanate aliphatique ou cycloaliphatique ou un prépolymère d'isocyanate, le composant isocyanate contenant des fonctions urées, le taux d'urée pouvant atteindre 10 % du poids total du composant isocyanate, de préférence ce taux d'urée étant compris entre 5 et 7 %, le composant polyol comprenant au moins un polyol long difonctionnel de masse moléculaire comprise entre 500 et 4000 et au moins un diol court en tant qu'agent d'allongement de chaine, le rapport des groupements équivalents isocyanates au groupements équivalents hydroxyles est d'environ égal à 1, les proportions entre les différents polyols sont choisies telles que le nombre de groupements hydroxyles équivalents dus au diol court représente de 20 à 70 % du total des groupements hydroxyles, cette couche présentant sous une épaisseur d'environ 0,5 mm, une contrainte au seuil d'écoulement $\sigma y$ à - 20° C inférieure, ou égale à 3 daN/mm$^2$, une contrainte à la rupture $\sigma R$ + 40° C supérieure ou égale à 2 daN/mm$^2$, un allongement à la rupture ● à + 20° C compris entre 250 et 500 %, une résistance à la déchirure amorcée $R_a$ à + 20° C supérieure ou égale à 9 daN/mm.

2. Vitrage feuilleté comprenant une feuille de verre, une couche intercalaire transparente à base d'un polyuréthane ayant des propriétés d'absorbeur d'énergie, une couche de revêtement transparente en matière plastique autocicatrisable, notamment à base d'un polyuréthane thermodurcissable, caractérisé en ce que la couche intercalaire à base d'un polyuréthane ayant des propriétés d'absorbeur d'énergie est formée essentiellement d'un polyuréthane obtenu par coulée réactive sur un support plan horizontal d'un mélange réactionnel d'un composant isocyanate d'une viscosité inférieure à 5 Pas à 40° C et d'un composant polyol, le composant isocyanate comprenant au moins un diisocyanate aliphatique ou cycloaliphatique ou un prépolymère

d'isocyanate, le composant polyol comprenant au moins un polyol long difonctionnel de masse moléculaire comprise entre 500 et 4000 au moins un diol court en tant qu'agent d'allongement de chaine, au moins un polyol de fonctionalité supérieure à 2, le rapport des groupements équivalents isocyanates au groupements équivalents hydroxyles est d'environ égal à 1, les proportions entre les différents polyols sont choisies telles que le nombre de groupements hydroxyles équivalents dus au diol court représente de 20 à 70 % du total des groupements hydroxyles, cette couche présentant sous une épaisseur d'environ 0,5 mm, une contrainte au seuil d'écoulement $\sigma y$ à - 20° C inférieure, ou égale à 3 daN/mm$^2$, une contrainte à la rupture $\sigma$ R + 40° C supérieure ou égale à 2 daN/mm$^2$ un allongement à la rupture ● à + 20° C compris entre 250 et 500 %, une résistance à la déchirure amorcée $R_a$ à + 20° C supérieure ou égale à 9 daN/mm.

3. Vitrage feuilleté selon une des revendications 1 à 2, caractérisé en ce que le composant isocyanate comprend du 3-isocyanato-méthyl-3,5,5-triméthylcyclohexylisocyanate.

4. Vitrage feuilleté selon une des revendications 1 à 3, caractérisé en ce que le composant isocyanate est formé essentiellement de 3-isocyanatométhyl- 3,5,5-triméthylcyclohexylisocyanate présentant des groupements urées et en ce que le composant polyol est formé essentiellement de polytétraméthylèneglycol de masse moléculaire d'environ 1000 et de butanediol - 1,4.

5. Vitrage feuilleté selon une des revendications 2 à 4, caractérisé en ce que le polyol de fonctionnalité supérieure à 2 est un triol.

6. Vitrage feuilleté selon l'une des revendications 2 à 5, caractérisé en ce que pour un équivalent d'hydroxyle au total pour le composant polyol du polyuréthane ayant des propriétés d'absorbeur d'énergie, le polyol long représente 0,30 à 0,45 équivalent, le diol court 0,2 à 0,7 équivalent et polyol de fonctionnalité supérieure à 2 de 0 à 0,35 équivalent.

7. Vitrage feuilleté selon une des revendications 1 à 6, caractérisé en ce que la couche de polyuréthane ayant des propriétés d'absorbeur d'énergie comprend des additifs tel un catalyseur, un agent nappant, un stabilisant.

8. Vitrage feuilleté selon une des revendications 1 à 7, caractérisé en ce que l'épaisseur de la couche du polyuréthane ayant des propriétés d'absorbeur d'énergie augmentée de l'épaisseur de la couche de revêtement est supérieure à 0,5 mm, avec une épaisseur d'au moins 0,4 mm pour la couche ayant des propriétés d'absorbeur d'énergie.

9. Vitrage feuilleté selon une des revendications 1 à 8, caractérisé en ce que l'adhésion entre la couche ayant des propriétés d'absorbeur d'énergie et la feuille de verre est supérieure à 2 daN/5 cm.

10. Vitrage feuilleté selon une des revendications 1 à 9, caractérisé en ce que la couche de polyuréthane, ayant des propriétés d'absorbeur d'énergie est obtenue par polymérisation à une température de polymérisation supérieure à 80° C lors de la coulée réactive.

11. Vitrage feuilleté selon une des revendications 1 à 10, caractérisé en ce que le composant isocyanate comprend en outre au moins un triisocyanate.

**Patentansprüche**

1. Verbundglasscheibe, bestehend aus einer Glasscheibe, einer transparenten Zwischenschicht auf Polyurethanbasis mit energieabsorbierenden Eigenschaften, einem transparenten Überzug aus selbstheilendem Kunststoffmaterial, insbesondere auf der Basis von duroplastischem Polyurethan, dadurch gekennzeichnet, daß die Zwischenschicht auf Polyurethanbasis mit energieabsorbierenden Eigenschaften im wesentlichen aus einem Polyurethan besteht, das erhalten wurde durch einen auf einer ebenen, horizontalen Unterlage durchgeführten Reaktionsgießvorgang einer Reaktionsmischung aus einer Isocyanatkomponente mit einer Viskosität kleiner als 5 Pa.s bei 40° C und einer Polyolkomponente, wobei die Isocyanatkomponente ein aliphatisches oder cycloaliphatisches Diisocyanat oder eine Vorstufe eines Isocyanatpolymeren enthält, die Isocyanatkomponente Harnstofffunktionen aufweist, wobei der Anteil des Harnstoffes 10 %, vorzugsweise zwischen 5 und 7 % der Isocyanatkomponente ausmacht, während die Polyolkomponente wenigstens ein langkettiges difunktionelles Polyol mit einem Molekulargewicht zwischen 500 und 4 000 und wenigstens ein kurzkettiges Diol als Agens zur Kettenverlängerung enthält, wobei die Menge der äquivalenten Isocyanatgruppen zu den äquivalenten Hydroxylgruppen ungefähr gleich 1 ist und die Verhältnisse der verschiedenen Polyole untereinander so gewählt sind, daß die Anzahl der äquivalenten Hydroxylgruppen bei den kurzen Diolen 20 bis 70 % aller Hydroxylgruppen ausmacht, wobei der Überzug eine Dicke von ca. 0,5 mm eine Fließschwellengrenze $\sigma_y \leq 3$ daN/mm$^2$ bei -20° C, eine Bruchgrenze $\sigma_R \geq 2$ daN/mm$^2$ bei +40° C, eine Bruchdehnung $\varepsilon_R$ zwischen 250 und 400 % bei +20° C und eine Zerreißfestigkeit $R_a \geq 9$ daN/mm$^2$ bei +20° C aufweist.

2. Verbundglasscheibe, bestehend aus einer Glasscheibe, einer transparenten Zwischenschicht auf Polyurethanbasis mit energieabsorbierenden Eigenschaften, einem transparenten Überzug aus selbstheilendem Kunststoffmaterial, insbesondere auf der Basis von duroplastischem Polyurethan,

dadurch gekennzeichnet, daß die Zwischenschicht auf Polyurethanbasis mit energieabsorbierenden Eigenschaften im wesentlichen aus einem Polyurethan besteht, das erhalten wurde durch einen auf einer ebenen, horizontalen Unterlage durchgeführten Reaktionsgießvorgang einer Reaktionsmischung aus einer Isocyanatkomponente mit einer Viskosität kleiner als 5 Pas bei 40° C und einer Polyolkomponente, wobei die Isocyanatkomponente wenigstens ein aliphatisches oder cycloaliphatisches Diisocyanat oder eine Vorstufe eines Isocyanatpolymeren enthält, die Polyolkomponente wenigstens ein langkettiges difunktionelles Polyol mit einem Molekulargewicht zwischen 500 und 4 000, wenigstens ein kurzkettiges Diol als Agens zur Kettenverlängerung und wenigstens ein Polyol mit einer über 2 liegenden Funktionalität enthält, wobei die Menge der äquivalenten Isocyanatgruppen zu den äquivalenten Hydroxylgruppen ungefähr gleich 1 ist, die Verhältnisse der verschiedenen Polyole untereinander so gewählt sind, daß die Anzahl der äquivalenten Hydroxylgruppen bei den kurzen Diolen 20 bis 70 % aller Hydroxylgruppen ausmacht und der Überzug eine Dicke von ca. 0,5 mm, eine Fließschwellengrenze $\sigma_Y \leqq 3$ daN/mm$^2$ bei -20° C, eine Bruchgrenze $\sigma_R \geqq 2$ daN/mm$^2$ bei +40° C, eine Bruchdehnung $\varepsilon_R$ zwischen 250 und 400 % bei +20° C und eine Zerreißfestigkeit $R_a \geqq$ 9 daN/mm$^2$ bei +20° C aufweist.

3. Verbundglasscheibe nach einem der Ansprüche 1 oder 2, dadurch gekennzeichnet, daß die Isocyanatkomponente 3-Isocyanat-methyl- 3,5,5-trimethylcyclohexyl-isocyanat enthält.

4. Verbundglasscheibe nach einem der Ansprüche 1 bis 3, dadurch gekennzeichnet, daß die Isocyanatkomponente im wesentlichen aus 3-Isocyanat-methyl-3,5,5-trimethylcyclohexylisocyanat mit Harnstoffgruppen und die Polyolkomponente im wesentlichen aus Polytetramethylenglykol mit einem Molekulargewicht von etwa 1 000 und aus 1,4-Butandiol bestehen.

5. Verbundglasscheibe nach einem der Ansprüche 2 bis 4, dadurch gekennzeichnet, daß das Polyol mit einer über 2 liegenden Funktionalität ein Triol ist.

6. Verbundglasscheibe nach einem der Ansprüche 2 bis 5, dadurch gekennzeichnet, daß für ein ganzes Hydroxyläquivalent für die PPolyolkomponente aus Polyurethan mit energieabsorbierenden Eigenschaften das langkettige Polyol 0,30 bis 0,45 Äquivalente, das kurzkettige Polyol 0,2 bie 0,7 Äquivalente und das Polyol mit einer über 2 liegenden Funktionalität 0 bis 0,35 Äquivalente ausmachen.

7. Verbundglasscheibe nach einem der Ansprüche 1 bis 6, dadurch gekennzeichnet, daß der Polyurethanüberzug mit den energieabsorbierenden Eigenschaften Zusätze, wie einen Katalysator, ein Verlaufmittel einen Stabilisator enthält.

8. Verbundglasscheibe nach einem der Ansprüche 1 bis 7, dadurch gekennzeichnet, daß die Dicke des Polyurethanüberzugs mit den energieabsorbierenden Eigenschaften vermehrt um die Dicke des Verkleidungsüberzugs mehr als 0,5 mm bei einer Dicke des Überzugs mit den energieabsorbierenden Eigenschaften von wenigstens 0,4 mm beträgt.

9. Verbundglasscheibe nach einem der Ansprüche 1 bis 8, dadurch gekennzeichnet, daß die Adhäsion zwischen der Scheibe mit den energieabsorbierenden Eigenschaften und dem Glas über 2 daN/5 cm liegt.

10. Verbundglasscheibe nach einem der Ansprüche 1 bis 9, dadurch gekennzeichnet, daß der Polyurethanüberzug mit den energieabsorbierenden Eigenschaften durch Polymerisation bei einer Polymerisationstemperatur erhalten wird, die zur Zeit des Gießvorganges über 80° C liegt.

11. Verbundglasscheibe nach einem der Ansprüche 1 bis 10, dadurch gekennzeichnet, daß die Isocyanatkomponente außerdem wenigstens ein Triisocyanat enthält.

**Claims**

1. A laminated pane comprising a glass sheet, a transparent intermediate layer based on polyurethane having energy-absorbing properties, and a transparent coating layer of self-healing plastics material, notably based on a thermosetting polyurethane, characterised in that the intermediate layer based on polyurethane having energy-absorbing properties is formed essentially of a polyurethane obtained by reactive casting on a flat horizontal support of a reaction mixture of an isocyanate component of viscosity less than 5 Pas at 40° C and a polyol component, the isocyanate component comprising at least one aliphatic or cycloaliphatic di-isocyanate or an isocyanate prepolymer, the isocyanate component containing urea functions, the content of urea being up to 10 % of the total weight of isocyanate component, the content of urea preferably being from 5 to 7 %, the polyol component comprising at least one long difunctional polyol of molecular weight from 500 to 4000 and at least one short diol as a chain lengthening agent, the ratio of isocyanate group equivalents to hydroxyl group equivalents is about 1, the proportions of the different polyols are selected such that the number of hydroxyl group equivalents due to the short polyol represents from 20 to 70 % of the total hydroxyl groups, and this layer having at a thickness of

about 0.5 mm, a flow stress $\sigma y$ at -20° C not exceeding 3 daN/mm$^2$, a rupture stress $\sigma_R$ at 40° C of at least 2 daN/mm$^2$, a lengthening at rupture $\varepsilon_R$ at +20° C from 250 to 500 %, and a tear resistance Ra at +20° C of at least 9 daN/mm.

2. A laminated pane comprising a glass sheet, a transparent intermediate layer based on a polyurethane having energy-absorbing properties, and a transparent coating layer of self-healing plastics material, notably based on a thermosetting polyurethane, characterised in that the intermediate layer based on polyurethane having energy-absorbing properties is formed essentially of a polyurethane obtained by reactive casting on a flat horizontal support of a reaction mixture of an isocyanate component having a viscosity less than 5 Pas at 40° C and a polyol component, the isocyanate component comprising at least one aliphatic or cycloaliphatic di-isocyanate or an isocyanate prepolymer, the polyol component comprising at least one long difunctional polyol of molecular weight from 500 to 4000, at least one short diol as a chain lengthening agent, and at least one polyol of functionality greater than 2, the ratio of isocyanate group equivalents to hydroxyl equivalents is about 1, the proportions of the different polyols are chosen such that the number of hydroxyl group equivalents due to the short diol represents from 20 % to 70 % of the total of hydroxyl groups, this layer having at a thickness of about 0.5 mm a flow stress $\sigma y$ at -20° C of not more than 3 daN/mm$^2$, a rupture stress $\sigma_R$ at +40° C of at least 2 daN/mm$^2$, a lengthening at rupture $\varepsilon R$ at +20° from 250 to 500 % and a tear resistance Ra at +20° C of at least 9 daN/mm.

3. A laminated pane according to claim 1 or 2, characterised in that the isocyanate component comprises 3-isocyanato-methyl-3,5,5-trimethylcyclohexylisocyanate.

4. A laminated pane according to one of claims 1 to 3, characterised in that the isocyanate component is formed essentially of 3-isocyanatomethyl-3,5,5-tri-methylcyclohexylisocyanate having urea groups and in that the polyol component is formed essentially of polytetramethyleneglycol of molecular weight about 1000 and 1,4-butanediol.

5. A laminated pane according to one of claims 2 to 4, characterised in that the polyol of functionality greater than 2 is a triol.

6. A laminated pane according to one of claims 2 to 5, characterised in that for one hydroxyl equivalent in total for the polyol component of the polyurethane having energy-absorbing properties, the long polyol represents 0.30 to 0.45 equivalent, the short diol 0.2 to 0.7 equivalent and the polyol of functionality greater than 2 0 to 0.35 equivalent.

7. A laminated pane according to one of claims 1 to 6, characterised in that the polyurethane layer having energy-absorbing properties comprises additives, such as a catalyst, a spreading agent and a stabiliser.

8. A laminated pane according to one of claims 1 to 7, characterised in that the thickness of the polyurethane layer having energy-absorbing properties increased by the thickness of the coating layer is greater than 0.5 mm, with a thickness of at least 0.4 mm for the layer having energy-absorbing properties.

9. A laminated pane according to any one of claims 1 to 8, characterised in that the adhesion between the layer having energy-absorption properties and the glass sheet is greater than 2 daN/5 cm.

10. A laminated pane according to any one of claims 1 to 9, characterised in that the polyurethane layer, having energy-absorbing properties is obtained by polymerisation at a polymerisation temperature greater than 80° C during reactive casting.

11. A laminated pane according to any one of claims 1 to 10, characterised in that the isocyanate component further comprises at least one tri-isocyanate.